# EUROPÄISCHE PATENTSCHRIFT

(11) **EP 2 896 680 B1**
(45) Veröffentlichungstag und Bekanntmachung des Hinweises auf die Patenterteilung: **19.08.2020**
(21) Anmeldenummer: 14195756.3
(22) Anmeldetag: 02.12.2014
(51) Int. Cl.: C10C 3/00, B01J 2/26

(54) **Verfahren und Vorrichtung zum Herstellen von Bitumenblöcken**
Device and method for manufacturing bitumen blocks
Procédé et dispositif de fabrication de blocs de bitume

(30) Priorität: 18.12.2013 DE 102013226373
(43) Veröffentlichungstag der Anmeldung: 22.07.2015
(73) Patentinhaber: IPCO Germany GmbH, 70736 Fellbach (DE)
(72) Erfinder: Kleinhans, Matthias, 71336 Waiblingen (DE); Roth, Bernhard, 71563 Affalterbach (DE)
(74) Vertreter: Patentanwälte Ruff, Wilhelm, Beier, Dauster & Partner mbB

(56) Entgegenhaltungen:
- DE-A1-102010 032 021
- GB-A- 1 428 056
- US-A- 3 265 779

## Beschreibung

Die Erfindung betrifft ein Verfahren zum Herstellen von Bitumenblöcken.

Für die Zwecke dieser Erfindung wird mit dem Begriff Bitumen Teerpech, Bitumen mit Füllstoffen sowie reines Bitumen bezeichnet. Weichbitumen, das einen sehr niedrigen Erweichungspunkt im Ring und Kugel Test (RuK) nach DIN EN 1427 und hohe Penetrationswerte bei der Nadelpenetration nach DIN EN 1426 aufweist, wird bisher im flüssigen Zustand in Fässer oder temperaturstabile Säcke eingefüllt. Sowohl bei Fässern als auch temperaturstabilen Säcken ist problematisch, dass diese nicht aufschmelzen und das Bitumen somit vor der Weiterverarbeitung aus dem Fass bzw. dem Sack entfernt werden muss. Bei Säcken müssen diese aufgeschnitten und in Handarbeit entfernt werden. Darüber hinaus ist es bekannt, aus Weichbitumen Platten zu formen und dann jeweils mehrere Platten in einem Sack einzuschrumpfen. Ein solcher Sack kann aufschmelzbar sein. Sowohl bei dem flüssigen Einfüllen von Bitumen in Fässer oder Säcke sowie auch beim Herstellen von Bitumenplatten ist problematisch, dass eine exakte Einhaltung einer vorgegebenen Füllmenge oder eines vorgegebenen Füllgewichts kaum zu realisieren ist.

Aus der deutschen Offenlegungsschrift DE 10 2010 032 021 A1 ist ein Verfahren zum Herstellen von Ammoniumnitrat enthaltenden Pastillen mit folgenden Schritten bekannt: Vertropfen einer Ammoniumnitrat enthaltenden Produktschmelze mittels eines Tropfenformers mit einer rotierenden, gelochten Trommel und einer an einer Innenseite der gelochten Trommel anliegenden Düsenleiste, so dass die Produktschmelze durch die Öffnungen der gelochten Trommel hindurchgedrückt wird, Ablegen der Produkttropfen auf einem umlaufenden Kühlband, Verfestigen der Produkttropfen während des Transports auf den Kühlband durch Abkühlen und Abnehmen der verfestigten Produkttropfen vom Kühlband.

Aus der britischen Patentschrift GB 1 428 056 A ist ein Verfahren zum Herstellen von Bitumenblöcken bekannt. In einem Sprühturm werden Bitumentropfen aus geschmolzenen Bitumen erzeugt und die Bitumentropfen werden dann auf einem umlaufenden Band eines Bandkühlers abgelegt. Die Bitumentropfen werden auf dem Band des Bandkühlers zu festen Partikeln verfestigt und die festen Partikel werden dann vom Band des Bandkühlers abgenommen.

Aus der US-Patentschrift US 3,265,779 A ist ein Verfahren zum Pastillieren von Steinkohle-Teerpech bekannt. Das Teerpech wird in geschmolzenem Zustand einem Tropfenformer zugeführt, der einen in einer Buchse beweglichen Stößel am Grund eines Tanks mit geschmolzenem Teerpech aufweist. Bei jeder Auf- und Abwärtsbewegung des Stößels wird eine bestimmte Menge geschmolzenes Teerpech unten aus dem Tank herausgedrückt. Dadurch werden größere Tropfen an Teerpech aus dem Tropfenformer ausgegeben. Die Teerpechtropfen werden auf einem umlaufenden Band eines Bandkühlers abgelegt und auf dem Band des Bandkühlers zu Pastillen verfestigt. Die Pastillen werden dann mittels eines Abnahmemessers vom Band abgenommen und als Schüttgut in mehreren Lagen übereinander mittels eines Transportbandes zur weiteren Lagerung abgeführt.

Mit der Erfindung soll ein Verfahren zum Herstellen von Bitumenblöcken verbessert werden.

Das der Erfindung zugrundeliegende Problem wird mit durch ein Verfahren zum Herstellen von Bitumenblöcken mit den Merkmalen von Anspruch 1 gelöst. Erfindungsgemäß sind folgende Schritte vorgesehen:
- Formen von Bitumentropfen aus geschmolzenem Bitumen in einem Tropfenformer,
- Ablegen der Bitumentropfen auf einem umlaufenden Band eines Bandkühlers,
- Verfestigen der Bitumentropfen auf dem Band des Bandkühlers zu Pastillen,
- Abnehmen der Pastillen vom Band und
- Abfüllen der Pastillen in Säcke, wobei Bitumen mit Penetrationswerten nach DIN EN 1426 von mehr als 10 dezimillimeter verwendet wird und wobei sich die Pastillen innerhalb der Säcke wenigstens teilweise zu einer kompakten Bitumenmasse verbinden.

In Weiterbildung der Erfindung erfolgt das Pressen der mit Pastillen gefüllten Säcke in eine gewünschte Form.

In Weiterbildung der Erfindung erfolgt das Pressen der mit Pastillen gefüllten Säcke mit einem so bemessenen Druck, dass sich die Pastillen wenigstens teilweise zu einer kompakten Bitumenmasse verbinden.

Bei einer Vorrichtung zum Durchführen des erfindungsgemäßen Verfahrens ist ein Tropfenformer zum Erzeugen von Bitumentropfen aus geschmolzenem Bitumen, ein Bandkühler mit einem umlaufenden Band zum Abkühlen und Verfestigen der auf dem umlaufenden Band abgelegten Bitumentropfen zu Pastillen und eine Abfüllvorrichtung zum Abfüllen der Pastillen in Säcke vorgesehen, wobei sich die Pastillen innerhalb der mit Pastillen gefüllten Säcke wenigstens teilweise zu einer kompakten Bitumenmasse verbinden.

Es kann eine Formpresse vorgesehen sein, um den mit Pastillen gefüllten Säcken eine gewünschte Form zu geben.

Das Erzeugen von Pastillen aus Bitumen und das Abfüllen dieser Pastillen in Säcke hat den erheblichen Vorteil, dass zum einen auch Bitumen mit hohen Penetrationswerten und niedrigem Erweichungspunkt kalt abgefüllt werden kann und somit Standardsäcke verwendet werden können. Speziell müssen diese Säcke nicht temperaturbeständig sein und es ist beispielsweise auch ein Verpacken ohne nachfolgendes Verschweißen und Schrumpfen der Säcke möglich. Die Säcke können aus aufschmelzbarem Material hergestellt sein, so dass bei der Weiterverarbeitung der Pastillen aus Bitumen die Säcke mit aufgeschmolzen werden können. Zum anderen erlaubt das kalte Abfüllen vereinzelter Pastillen eine sehr exakte Einhaltung der Füllmenge. Die einzelnen Säcke können dadurch bezüglich ihres Gewichts nur sehr geringe Toleranzen aufweisen. Erfindungsgemäß können die mit den Pastillen befüllten Säcke dann in einer Formpresse in eine gewünschte Form gebracht werden, beispielsweise eine quaderartige Form. Dies erleichtert das Stapeln der Säcke und sorgt dafür, dass beim Transport der Säcke nur wenig Transportraum benötigt wird. Es ist das Verdienst der Erfinder, erkannt zu haben, dass das Herstellen von Pastillen so viele Vorteile beim Abfüllen und beim Bemessen der Füllmenge hat, dass sich der Aufwand für das Pastillieren lohnt, auch wenn die Pastillen in den Säcken wieder zusammenkleben oder sogar das nachfolgende Formpressen der Säcke als zusätzlicher Schritt erfolgt. Speziell können mit der Erfindung die Vorteile einer problemlosen Abfüllung der Bitumenpastillen im kalten Zustand mit der exakten Formgebung der Säcke nach dem Pressen verbunden werden. Es wird dabei gemäß der Erfindung bewusst in Kauf genommen, dass sich die Pastillen in den Säcken selbsttätig oder gegebenenfalls beim Pressen der mit Pastillen befüllten Säcke wenigstens teilweise zu einer kompakten Bitumenmasse verbinden. Bei der Weiterverarbeitung von Bitumen, insbesondere Weichbitumen, ist es in der Regel überhaupt nicht erforderlich, dass die Pastillen noch im vereinzelten Zustand vorliegen. Überraschenderweise bietet das Pastillieren von Bitumen, insbesondere Weichbitumen, vor dem Abfüllen aber dennoch so große Vorteile, dass der Weg des Pastillierens, Abfüllens und gegebenenfalls nachfolgenden Formpressens der befüllten Säcke begangen wird.

Die Formpresse kann wenigstens einen Pressstempel aufweisen.

Mittels eines Pressstempels lassen sich befüllte Säcke, die beispielsweise auf einem Transportband aufliegen, problemlos in eine quaderartige oder sonstige Form pressen.

Die Formpresse kann wenigstens eine Druckrolle aufweisen.

Auch mittels einer oder mehrerer Druckrollen lassen sich beispielsweise auf einem Transportband aufliegende befüllte Säcke problemlos in eine gewünschte Form, beispielsweise eine Quaderform, pressen. Eine Quaderform ist dann sehr gut dafür geeignet, auf Paletten gestapelt zu werden.

Die Formpresse kann ausgebildet sein, einen so bemessenen Druck auf den mit Pastillen gefüllten Sack auszuüben, so dass sich die Pastillen wenigstens teilweise zu einer kompakten Bitumenmasse verbinden.

Das Pressen der mit Pastillen gefüllten Säcke in einer Weise, d.h. mit einem Druck und bei einer Temperatur, so dass sich die Pastillen wenigstens teilweise zu einer kompakten Bitumenmasse verbinden, erscheint auf den ersten Blick kontraproduktiv. Schließlich wurde das Bitumen zunächst aufgeschmolzen und zu Pastillen verfestigt sowie dann im verfestigten Zustand kalt in Säcke abgefüllt. Es hat sich aber gezeigt, dass das Formpressen der mit Pastillen befüllten Säcke in Bezug auf den Weitertransport und die Weiterverarbeitung des Bitumen so vorteilhaft ist, dass der an und für sich kontraproduktiv erscheinende Schritt des Formpressens der befüllten Säcke vorgenommen wird. Wenn die Pastillen in der Formpresse sich wenigstens teilweise zu einer kompakten Bitumenmasse verbinden, ergibt sich darüber hinaus der Vorteil, dass die in der Formpresse erzielte Form des Sacks aufrechterhalten bleibt. Das Stapeln oder Weitertransportieren der Säcke kann dadurch in sehr einfacher Weise erfolgen. Der von der Formpresse ausgeübte Druck wird dabei in Abhängigkeit einer Temperatur der Pastillen, einer Materialbeschaffenheit der Pastillen, speziell des Schmelzpunktes der Pastillen, sowie gegebenenfalls einer Umgebungstemperatur bestimmt und bemessen.

Die Abfüllvorrichtung kann unmittelbar stromabwärts des Bandkühlers angeordnet sein.

Auf diese Weise müssen die vom Band abgenommenen Pastillen nicht zunächst in einem Vorratsbehälter gespeichert werden, sondern können unmittelbar vom Band weg in Säcke abgefüllt werden. Dies vereinfacht den Aufbau der Abfülleinrichtung und verhindert gleichzeitig, dass speziell im Falle von Weichbitumen die Pastillen vor dem Abfüllen sich wieder zu einer kompakten Masse verbinden.

Die Abfülleinrichtung kann eine Verteileinrichtung mit wenigstens einer Verteilerklappe und mehrere Verteilwege aufweisen, um vom Band abgenommene Pastillen wahlweise zu einer von mehreren Abfüllstationen zu leiten.

Auf diese Weise kann beispielsweise eine Schurre in Form einer oder mehrerer geneigter Ebenen vorgesehen sein, die jeweils zu einer Abfüllstation für jeweils einen Sack führen. Die Verteilerklappe verteilt dann die vom Bandkühler abgenommenen Pastillen auf die einzelnen Abfüllstationen, so dass für das Befüllen und nachfolgende Verschließen sowie den Abtransport jeweils eines Sacks genügend Zeit zur Verfügung steht. In vorteilhafter Weise weist die Abfüllvorrichtung wenigstens eine Waage auf. Dies kann in der Weise vorgesehen sein, dass der zu befüllende Sack auf einer Waage steht und der Befüllvorgang so lange fortgesetzt werden, bis ein gewünschtes Gewicht des befüllten Sacks erreicht ist. Wie bereits ausgeführt wurde, lässt sich durch die vereinzelten und verfestigten Pastillen eine sehr exakte Einhaltung einer angestrebten Füllmenge bzw. eines angestrebten Füllgewichts erreichen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der dargestellten Ausführungsformen und der einzelnen Zeichnungen lassen sich dabei in beliebiger Weise kombinieren, ohne den Rahmen der Erfindung zu überschreiten. In den Zeichnungen zeigen:
- Fig. 1: eine schematische Darstellung einer Vorrichtung zum Pastillieren und Verpacken von Bitumen,
- Fig. 2: eine schematische Darstellung einer Formpresse gemäß einer weiteren Ausführungsform für die Vorrichtung der Fig. 1 und
- Fig. 3: eine schematische Darstellung einer Abfüllvorrichtung gemäß einer weiteren Ausführungsform für die Vorrichtung der Fig. 1.

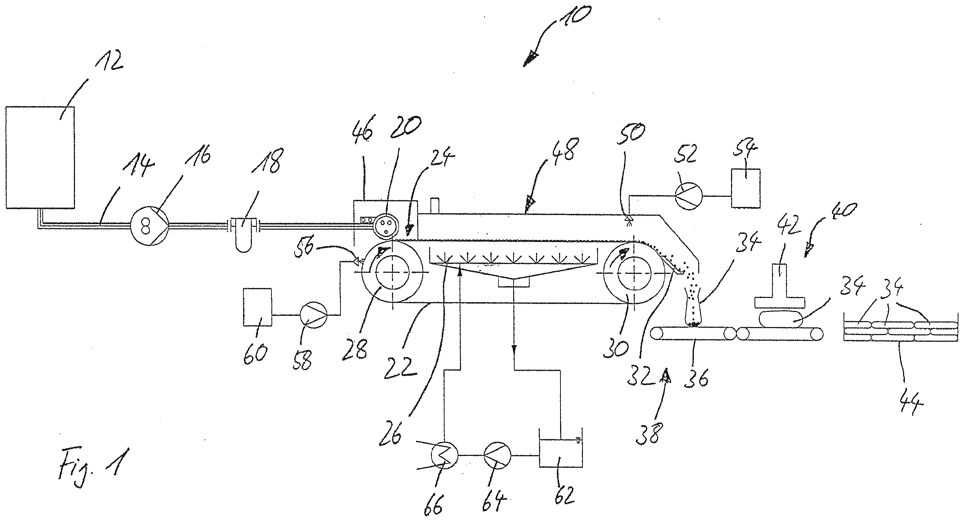

In Fig. 1 ist eine Vorrichtung 10 zum Pastillieren und Verpacken von Bitumen, insbesondere Weichbitumen, dargestellt, mit der das erfindungsgemäße Verfahren durchgeführt werden kann. Als Weichbitumen wird dabei Bitumen bezeichnet, das bei der sogenannten "Nadelpenetration" gemäß DIN EN 1426 "Bitumen und bitumenhaltige Bindemittel - Bestimmung der Nadelpenetration", Penetrationswerte von 10 dmm (dezimillimeter) oder mehr hat. Sogenanntes Hartbitumen hat üblicherweise Penetrationswerte im Bereich von 2-3 dmm. Sogenanntes Weichbitumen, beispielsweise für die Abdichtung von Dächern, hat Penetrationswerte von etwa 20 dmm bis 40 dmm. Sehr weiche Bitumenqualitäten für den Straßenbau liegen im Bereich von 60 dmm bis 100 dmm oder sogar noch höher. Als Bitumen im Sinne der Erfindung wird dabei auch neben reinem Bitumen auch Bitumen mit Füllstoffen, insbesondere mit bis zu 30% Füllstoffen, sowie Teerpech bezeichnet.

Die Vorrichtung 10 weist einen Vorratstank 12 für flüssiges Bitumen auf, von dem eine beheizte Leitung 14 über eine Pumpe 16 und einen Filter 18 zu einem Tropfenformer 20 führt. Der Tropfenformer ist als sogenannte Rotoform-Einheit ausgebildet und weist eine rotierende, gelochte Außentrommel auf, durch die mittels einer innerhalb der rotierenden Außentrommel angeordneten feststehenden Düsenleiste das geschmolzene Bitumen gedrückt wird. Der Tropfenformer 20 ist oberhalb eines umlaufenden Stahlbandes 22 angeordnet, auf dessen Obertrum dann die mit dem Tropfenformer 20 erzeugten Bitumentropfen 24 abgelegt werden. Das Obertrum des umlaufenden Stahlbandes 22 wird von unten her mittels Sprühdüsen 26 mit Kühlwasser gekühlt. Die Bitumentropfen verfestigen dadurch während der Bewegung des umlaufenden Stahlbandes 22, in der Fig. 1 im Uhrzeigersinn, auf dem Obertrum des Stahlbands 22 zu Pastillen.

Das Stahlband 22 ist über eine linke Umlenktrommel 28 und eine rechte Umlenktrommel 30 geführt. An der in Fig. 1 rechten Umlenktrommel 30 werden die verfestigten Pastillen dann mittels eines Abnahmemessers 32 von der Oberfläche des Stahlbandes abgenommen und unmittelbar in einen Sack 34 gefüllt. Der Sack 34 ist auf einem umlaufenden Transportband 36 angeordnet. Das Abnahmemesser 32 und das Transportband 36 bilden eine in Fig. 1 lediglich schematisch dargestellte Abfülleinrichtung 38 für Säcke 34.

Von dem Transportband 36 der Abfüllstation 38 aus kann der mit Pastillen befüllte Sack 34 dann zu einer Formpresse 40 befördert werden. Dort wird der befüllte Sack 34 mittels eines Pressstempels 42 flachgedrückt und dadurch in eine gewünschte Form, die hier quaderartig ist, gebracht. Ausgehend von der Formpresse 40 werden die dann quaderartigen Säcke auf Paletten 44 gestapelt.

Der Tropfenformer 20 ist mittels einer Haube 48 abgedeckt, die verhindert, dass Bitumendämpfe in die Umgebung gelangen. Die Haube 48 kann mit einer in Fig. 1 nicht dargestellten Absaugeinrichtung versehen sein. In ähnlicher Weise ist das Obertrum des umlaufenden Stahlbands 22 stromabwärts der Haube 46 mit einer Haube 48 versehen, die auch die Abfüllstation 38 abschnittsweise überdeckt. Auch durch die Haube 48 soll verhindert werden, dass Bitumendämpfe in die Umgebung gelangen. Oberhalb der in Fig. 1 rechten Umlenktrommel 30 ist oberhalb des Stahlbandes 22 eine Düse 50 dargestellt, die über eine Pumpe 52 aus einem Vorratstank 54 mit flüssigem oder puderförmigem Trennmittel gespeist wird. Das Bepudern oder Besprühen der verfestigten Pastillen auf dem Stahlband 22 soll dafür sorgen, dass sich diese noch in vereinzelter Form in die Säcke 34 abfüllen lassen und beispielsweise nicht bereits im Bereich des Abnahmemessers 32 wieder miteinander verbinden. Das Abnahmemesser 32 kann zu diesem Zweck auch gekühlt sein.

An der in Fig. 1 linken Umlenktrommel 28 ist in Drehrichtung der Umlenktrommel 28 noch vor dem Tropfenformer 20 eine weitere Düse 56 vorgesehen, die über eine Pumpe 58 aus einem Vorratstank 60 mit Trennmittel gespeist wird. Mittels der Düse 56 kann das Trennmittel, speziell flüssiges Trennmittel, auf das Stahlband 22 aufgesprüht werden. Dadurch bildet sich ein Trennmittelfilm auf dem Stahlband, der dann verhindert, dass die vom Tropfenformer 20 auf das Stahlband 22 abgelegten flüssigen Bitumentropfen 24 an der Oberfläche des Stahlbandes ankleben.

Die Sprühdüsen 26, mit denen die Unterseite des Obertrums des Stahlbandes 22 mit Kühlwasser besprüht wird, sind innerhalb eines Auffangbeckens angeordnet, von dem aus das von der Unterseite des Stahlbandes 22 wieder abtropfende Kühlwasser zu einem Sammeltank 62 geführt wird. Ausgehend vom Sammeltank wird das Kühlwasser dann über eine Pumpe 64 und einen Wärmetauscher 66 wieder zu den Sprühdüsen 26 gefördert.

Mit der Vorrichtung 10 lässt sich Bitumen, speziell Weichbitumen, in Form von verfestigten Pastillen problemlos in Säcke 34 füllen und dadurch, dass das Bitumen in Form von verfestigten Pastillen in die Säcke 34 gefüllt wird, lässt sich eine vorgegebene Füllmenge und ein vorgegebenes Füllgewicht der Säcke 34 problemlos einhalten. Darüber hinaus können die Säcke 34 aus nicht temperaturbeständigem Material ausgebildet sein, da das Bitumen ja kalt in Form von verfestigten Pastillen abgefüllt wird. Die Säcke 34 können dadurch aus aufschmelzbarem Material bestehen, und das Bitumen kann beispielsweise zusammen mit den Säcken 34 bei der Weiterverarbeitung aufgeschmolzen werden.

In der Formpresse 40 können die befüllten und verschlossenen Säcke 34 dann in eine gewünschte Form gepresst werden. Dabei wird der zunächst kontraproduktiv erscheinende Vorgang in Kauf genommen, dass nämlich durch den Pressvorgang sich die Bitumenpastillen wenigstens teilweise zu einer kompakten Bitumenmasse verbinden. Das wenigstens teilweise Verbinden der Pastillen zu einer kompakten Bitumenmasse hat aber wiederum den Vorteil, dass die gepressten Säcke ihre Form beibehalten. Auch bei der Weiterverarbeitung des in die Säcke 34 gefüllten Bitumens stört eine zumindest teilweise Verbindung der Pastillen zu einer kompakten Masse nicht. Es können aber die Vorteile der sehr einfachen Abfüllung der verfestigten Pastillen in Säcke 34 genutzt werden.

Selbst wenn die Formpresse 40 nicht eingesetzt wird, verbinden sich die Pastillen nach dem Abfüllen in die Säcke 34 wenigstens teilweise zu einer kompakten Bitumenmasse. Dennoch wird der Aufwand für die vorhergehende Pastillierung betrieben, da sich überraschenderweise sehr große Vorteile hinsichtlich der Verpackung in die Säcke 34, der Beschaffenheit der Säcke 34 und der exakten Einhaltung der Füllmenge der Säcke 34 ergeben

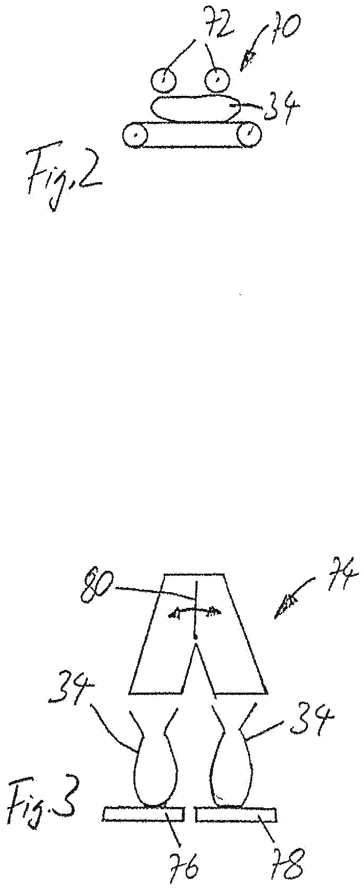

Die Darstellung der Fig. 2 zeigt eine schematische Darstellung einer Formpressstation 70 gemäß einer weiteren Ausführungsform. Die Formpressstation 70 könnte anstelle der Formpressstation 40 zum Einsatz kommen. Im Unterschied zur Formpressstation 40 weist die Formpressstation 70 zwei Druckrollen 72 auf, mit denen der befüllte Sack 34 in die gewünschte Form gepresst wird.

Die Darstellung der Fig. 3 zeigt eine weitere Ausführungsform einer Abfüllvorrichtung 74. Die Abfüllvorrichtung könnte anstelle der Abfüllvorrichtung 38 in Fig. 1 zum Einsatz kommen. Mit der Abfüllvorrichtung 74 können zwei Säcke 34 befüllt werden, wobei jeder der Säcke 34 auf jeweils einer Waage 76 bzw. 78 angeordnet ist. Ist das gewünschte Füllgewicht der Säcke 34 erreicht, wird mittels einer nicht dargestellten Steuerung eine Verteilklappe 80 umgestellt, so dass Bitumenpastillen dann lediglich noch zu dem in Fig. 3 linken bzw. rechten Sack gelangen. Die Verteilklappe 80 ist im Weichenbereich einer Schurre angeordnet, die zwei Verteilwege aufweist, einen ersten Verteilweg, der in Fig. 3 nach links zu einem Sack 34 führt, und einen zweiten Verteilweg, der zu dem in Fig. 3 rechten Sack 34 führt.

## Patentansprüche

1. Verfahren zum Herstellen von Bitumenblöcken mit den Schritten:
- Formen von Bitumentropfen aus geschmolzenem Bitumen in einem Tropfenformer (20),
- Ablegen der Bitumentropfen auf einem umlaufenden Band (22) eines Bandkühlers,
- Verfestigen der Bitumentropfen auf dem Band (20) des Bandkühlers zu Pastillen und
- Abnehmen der Pastillen vom Band (22) **gekennzeichnet durch**
- Abfüllen der Pastillen in Säcke (34), wobei Bitumen mit Penetrationswerten nach DIN EN 1426 von mehr als 10 dezimillimeter verwendet wird und wobei sich die Pastillen innerhalb der mit Pastillen gefüllten Säcke (34) wenigstens teilweise zu einer kompakten Bitumenmasse verbinden.

2. Verfahren nach Anspruch 1, **gekennzeichnet durch** Pressen der mit Pastillen gefüllten Säcke (34) in eine gewünschte Form.

3. Verfahren nach Anspruch 2, **gekennzeichnet durch** Pressen der mit Pastillen gefüllten Säcke (34) mit einem so bemessenen Druck, dass sich die Pastillen wenigstens teilweise zu einer kompakten Bitumenmasse verbinden.

## Claims

1. Method for the production of bitumen blocks, comprising the steps:
- forming of bitumen drops from molten bitumen in a drop former (20),
- depositing of the bitumen drops on a rotating belt (22) of a belt cooler,
- solidifying of the bitumen drops on the belt (20) of the belt cooler into tablets, and
- removing of the tablets from the belt (22), **characterized by**
- filling of the tablets into bags (34), wherein bitumen with penetration values according to DIN EN 1426 of more than 10 decimillimeters is used, and wherein the tablets, inside the bags (34) filled with tablets, combine at least partially into a compact bitumen mass.

2. Method according to claim 1, **characterized by** pressing the bags (34) filled with tablets into a desired shape.

3. Method according to claim 2, **characterized by** pressing the bags (34) filled with tablets with a pressure dimensioned such that the tablets are at least partially combined into a compact bitumen mass.

## Revendications

1. Procédé pour la préparation de blocs de bitume comportant les étapes de :
- mise en forme de gouttes de bitume à partir de bitume fondu dans un appareil de mise en forme de gouttes (20),
- dépôt des gouttes de bitume sur une bande en rotation (22) d'un refroidisseur à bande,
- solidification des gouttes de bitume sur la bande (20) du refroidisseur à bande en des pastilles et
- retrait des pastilles de la bande (22) **caractérisé par**
- le remplissage des pastilles dans des sacs (34), du bitume doté de valeurs de pénétration selon la norme DIN EN 1426 supérieures à 10 décimillimètres étant utilisé et les pastilles fusionnant au moins partiellement en une masse compacte de bitume à l'intérieur des sacs (34) remplis de pastilles.

2. Procédé selon la revendication 1, **caractérisé par** le pressage des sacs (34) remplis de pastilles en une forme souhaitée.

3. Procédé selon la revendication 2, **caractérisé par** le pressage des sacs (34) remplis de pastilles avec une pression mesurée de telle manière que les pastilles fusionnent au moins partiellement en une masse compacte de bitume.
